# EUROPEAN PATENT APPLICATION

(11) **EP 4 529 330 A1**
(43) Date of publication of application: **26.03.2025**
(21) Application number: 23893158.8
(22) Date of filing: 29.06.2023
(51) Int. Cl.: H04W 72/1273

(54) **METHOD AND APPARATUS FOR CONTROLLING DOWNLINK SCHEDULING OF BASE STATION, AND STORAGE MEDIUM AND ELECTRONIC APPARATUS**

(30) Priority: 22.11.2022 CN 202211473900
(71) Applicant: Sunwave Communications Co., Ltd., Hangzhou, Zhejiang 310053 (CN)
(72) Inventor: WANG, Weiqiao, Hangzhou, Zhejiang 310053 (CN); ZHOU, Rui, Hangzhou, Zhejiang 310053 (CN); BIAN, Yanchun, Hangzhou, Zhejiang 310053 (CN)
(74) Representative: Zacco GmbH
(86) International application number: PCT/CN2023/104204
(87) International publication number: WO 2024/109058

(57) **Abstract**

Disclosed in the present disclosure are a method and an apparatus of controlling downlink scheduling of a base station, a storage medium, and an electronic apparatus. The method includes: detecting Rank Indicator (RI) data corresponding to RI information, the RI information and the CQI information being reported by the terminal within the current period and Channel Quality Indicator (CQI) data corresponding to CQI information; querying, from one or more layer number adjustment conditions corresponding to a current scheduling layer number, a target layer number adjustment condition that the RI data and the CQI data meet; and determining a target scheduling layer number corresponding to the target layer number adjustment condition to be a scheduling layer number used by the base station within a target period, wherein the target period is a period after the current period. The present disclosure solves the problem in the related art of the fluctuation of terminal data and a wireless channel being relatively significant during the downlink scheduling of the base station.

## Description

This application claims priority to Chinese Patent Application No. 202211473900.9, filed to the China National Intellectual Property Administration on November 22, 2022 and entitled "Method and Apparatus Of Controlling Downlink Scheduling of Base Station, Storage Medium, and Electronic Apparatus", the disclosure of which is hereby incorporated by reference in its entirety.

### Technical Field

The present disclosure relates to the technical field of wireless communications, and in particular, to a method and an apparatus of controlling downlink scheduling of a base station, a storage medium, and an electronic apparatus.

### Background

Multiple Input Multiple Output ((MIMO) (antenna diversity technology) technology is an important technology in the evolution of wireless communication protocols, which realizes multi-channel data transmission through the software and hardware support of terminals and base stations, and can improve the peak rate of near-point terminal users. At the same time, the combined gain brought by a plurality of antennas can also improve the edge rate of edge users, thereby improving the coverage range. The improvement of spectrum efficiency may improve network capacity and user experience. The MIMO technology plays an important role in air interface technology of Long Term Evolution (LTE) and New Radio (NR) (5G wireless network technology).

The main processing flow of downlink Single-User Multiple-Input Multiple-Output (SU-MIMO) is as follows: the terminal calculates the optimal channel correlation matrix rank according to channel measurement information and a wireless channel correlation algorithm, performs channel encoding on the information, and reports same to the base station through a wireless channel, and the base station schedules data for multiplexing at different layers according the information, thereby realizing an adaptive MIMO function and achieving the effect of increasing the peak data rate.

However, due to the complex and changeable conditions of the external wireless environment, the measurement information of the terminal has a certain fluctuation, and the information of the channel correlation matrix rank also has the possibility of sudden change and repeated back-and-forth hopping. If only the information of the channel correlation matrix rank is considered, the base station scheduling may have significant fluctuation and ping-pong scheduling, thereby increasing the fluctuation of the wireless channel and terminal data, and reducing the reliability of downlink scheduling of the base station.

For the above problems, no effective solution has been proposed.

### Summary

Embodiments of the present disclosure provide a method and an apparatus for controlling downlink scheduling of a base station, a storage medium, and an electronic apparatus, so as to solve the problem in the related art of the fluctuation of terminal data and a wireless channel being relatively significant during the downlink scheduling of the base station.

According to one aspect of the embodiments of the present disclosure, a method for controlling downlink scheduling of a base station is provided, including: detecting Rank Information (RI) data corresponding to RI (which indicates the rank of a transmission channel in an MIMO system and may be regarded as the number of independent parallel channels on a transmission path between transceiver devices) information, and Channel Quality Indicator (CQI) data corresponding to CQI information, the RI information and the CQI information being reported by the terminal within the current period; querying, from one or more layer number adjustment conditions corresponding to a current scheduling layer number, a target layer number adjustment condition that the RI data and the CQI data meet, where a base station is configured to perform downlink scheduling on control information and data information within the current period according to the current scheduling layer number, the one or more layer number conversion conditions are in one-to-one correspondence with one or more scheduling layer numbers, and the one or more scheduling layer numbers are scheduling layer numbers to which the current scheduling layer number is allowed to be converted; and determining a target scheduling layer number corresponding to the target layer number adjustment condition to be a scheduling layer number used by the base station within a target period, where the target period is a period after the current period.

Optionally, in one exemplary embodiment, the operation of detecting RI data corresponding to RI information, which is reported by a terminal within a current period, and detecting CQI data corresponding to CQI information includes: receiving the RI information reported by the terminal within the current period; recording times of occurrences of each RI parameter value in the RI information and RI reporting total times to obtain RI reporting total times, and each RI parameter value and reporting times with a corresponding relationship as the RI data; receiving the CQI information reported by the terminal within the current period; and recording the number of CQI parameters in the CQI information falling into each of a plurality of CQI intervals and CQI reporting total times to obtain CQI reporting total times , and the CQI intervals and the number of CQI parameters in the CQI information falling into each of a plurality of CQI intervals with a corresponding relationship as the CQI data.

Optionally, in one exemplary embodiment, the operation of recording times of occurrences of each RI parameter value in the RI information and RI reporting total times to obtain RI reporting total times, and each RI parameter value and reporting times with a corresponding relationship as the RI data includes: calculating times of occurrences of each integer from 1 to N in the RI information reported by the terminal within the current period and the RI reporting total times to obtain the RI reporting total times, and the each RI parameter value and RI reporting times with a corresponding relationship as the RI data, wherein the N is the number of downlink radio frequency (RF) antennas of the base station.

Optionally, in one exemplary embodiment, the operation of recording the number of CQI parameters in the CQI information falling into each of a plurality of CQI intervals and CQI reporting total times to obtain the CQI reporting total times, and the CQI intervals and the number of CQI parameters in the CQI information falling into each of a plurality of CQI intervals with a corresponding relationship as the CQI data includes: recording the number of CQI parameters in the CQI information falling into each of the plurality of CQI intervals and the CQI reporting total times to obtain the CQI reporting total times, and the CQI intervals and the number of CQI parameters in the CQI information falling into each of a plurality of CQI intervals as the CQI data.

Optionally, in one exemplary embodiment, the operation of querying, from one or more layer number adjustment conditions corresponding to a current scheduling layer number, a target layer number adjustment condition that the RI data and the CQI data meet includes: taking the current scheduling layer number as a current state, and acquiring, from a state conversion model, a constraint condition corresponding to each of one or more reference states corresponding to the current state to obtain one or more constraint conditions, where the state conversion model records a state conversion relationships each being between scheduling layer numbers allowed to be used by the base station and constraint conditions that each of the state conversion relationship needs to meet, each of the one or more reference states is state having one of the state conversion relationships with the current state, each of the one or more reference state corresponding to one scheduling layer number to which the current scheduling layer number is allowed to be converted, and the one or more layer number adjustment conditions comprise the one or more constraint conditions; and acquiring, from the one or more constraint conditions, a target constraint condition that the RI data and the CQI data meet as the target layer number adjustment condition.

Optionally, in one exemplary embodiment, the operation of acquiring, from a state conversion model, a constraint condition corresponding to each of one or more reference states corresponding to the current state to obtain one or more constraint conditions includes: in a case where the current state is a layer p state wherein the minimum layer number is p, acquiring a reference state as a layer p+1 state, wherein the constraint condition corresponding to the layer p+1 state is to meet following two branches at the same time: a first branch: a ratio of RI_REPORT_NUMp to RI_REPORT_TOTAL_NUM being less than a first threshold; and a second branch: a ratio of CQI_THRESHOLD_NUMp to CQI_THRESHOLD_TOTAL_NUM being less than a second threshold, where the RI_REPORT_NUMp is RI reporting times of a RI parameter value corresponding to the minimum layer number, the RI_REPORT_TOTAL_NUM is RI reporting total times, the RI data comprises the RI reporting total times within the current period , and the RI parameter values and the RI reporting times with a corresponding relationship, the CQI_THRESHOLD_NUMp is a CQI falling number in a CQI interval corresponding to the minimum layer number, the CQI_THRESHOLD_TOTAL_NUM is CQI reporting total times, and the CQI data comprises the CQI reporting total times within the current period, and the CQI interval and the CQI falling number with a corresponding relationship as the CQI data.

Optionally, in one exemplary embodiment, the operation of acquiring, from a state conversion model, a constraint condition corresponding to each of one or more reference states corresponding to the current state to obtain one or more constraint conditions includes: in a case where the current state is a layer q state wherein an intermediate layer number is q except for the minimum layer number and the maximum layer number, acquiring a reference state as a layer q+1 state and a layer t state, wherein a constraint condition corresponding to the layer q+1 state is to meet following two branches at the same time: a third branch: a ratio of RI_REPORT_NUMq to RI_REPORT_TOTAL_NUM being greater than or equal to a third threshold; and a fourth branch: a ratio of CQI_THRESHOLD_NUMq to CQI_THRESHOLD_TOTAL_NUM being greater than or equal to a fourth threshold, where the RI_REPORT_NUMq is the sum of RI reporting times of RI parameter values corresponding to all layer numbers greater than q, the RI_REPORT_TOTAL_NUM is RI reporting total times, the RI data comprises RI reporting total times within the current period ,and the RI parameter values and the RI reporting times with a corresponding relationship, the CQI_THRESHOLD_NUMq is the sum of CQI falling numbers in CQI intervals corresponding to all layer numbers greater than q, the CQI_THRESHOLD_TOTAL_NUM is reporting total times, and the CQI data comprises CQI reporting total times within the current period, and the CQI intervals and the CQI falling numbers with a corresponding relationship; t is all layer numbers less than q, and a constraint condition corresponding to the layer t state is to meet one of following three branches: a fifth branch: a ratio of RI_REPORT_NUMt to RI_REPORT_TOTAL_NUM being greater than a fifth threshold; a sixth branch: a ratio of CQI_THRESHOLD_NUMt to CQI_THRESHOLD_TOTAL_NUM being greater than a sixth threshold; and a seventh branch: LAYER_SCHE_BLERq being greater than the sum of LAYER_SCHE_BLERt and A*BLER_DELTA, where the RI_REPORT_NUMt is the sum of RI reporting times of RI parameter values corresponding to all layer numbers less than or equal to t, the CQI_THRESHOLD_NUMt is the sum of CQI falling numbers in CQI intervals corresponding to all layer numbers less than or equal to t, the LAYER_SCHE_BLERq is downlink Block Error Rate (BLER) information during a layer q scheduling, the LAYER_SCHE_BLERt is downlink BLER information during a layer t scheduling, the A is a difference between q and t, and the BLER_DELTA is a preset BLER change threshold.

Optionally, in one exemplary embodiment, the operation of acquiring, from a state conversion model, a constraint condition corresponding to each of one or more reference states corresponding to the current state to obtain one or more constraint conditions includes: in a case where the current state is a layer m state wherein the maximum layer number is m, acquiring a reference state as a layer r state, wherein r is all layer numbers less than m, and a constraint condition corresponding to the layer r state is to meet one of following three branches: an eighth branch: a ratio of RI_REPORT_NUMr to RI_REPORT_TOTAL_NUM being greater than a seventh threshold; a ninth branch: a ratio of CQI_THRESHOLD_NUMr to CQI_THRESHOLD_TOTAL_NUM being greater than an eighth threshold; and a tenth branch: LAYER_SCHE_BLERm being greater than the sum of LAYER_SCHE_BLERr and B*BLER_DELTA, where the RI_REPORT_NUMr is the sum of RI reporting times of RI parameter values corresponding to all layer numbers less than or equal to the r, the RI_REPORT_TOTAL_NUM is RI reporting total times, the RI data comprises RI reporting total times within the current period,and the RI parameter values and the RI reporting times with a corresponding relationship, CQI_THRESHOLD_NUMr is the sum of CQI falling numbers in CQI intervals corresponding to all layer numbers less than or equal to r, the CQI_THRESHOLD_TOTAL_NUM is CQI reporting total times, the CQI data comprises CQI reporting total times within the current period ,and the CQI intervals and the CQI falling numbers with a corresponding relationship , the LAYER_SCHE_BLERm is downlink BLER information during a layer m scheduling, the LAYER_SCHE_BLERr is downlink BLER information during a layer r scheduling, the B is a difference between m and r, and the BLER_DELTA is the preset BLER change threshold.

Optionally, in one exemplary embodiment, after the querying, from one or more layer number adjustment conditions corresponding to a current scheduling layer number, a target layer number adjustment condition that the RI data and the CQI data meet, the method further includes: in a case where the target layer number conversion condition is not queried, determining the current scheduling layer number to be the scheduling layer number used by the base station within the target period.

According to another embodiment of the present disclosure, an apparatus of controlling downlink scheduling of a base station, comprising:
a detection module controlling downlink scheduling of a base station is further provided, including: a detection module, configured to detect Rank Information (RI) data corresponding to RI information, and Channel Quality Indicator (CQI) data corresponding to CQI information, the RI information and the CQI information being reported by a terminal within a current period; a query module, configured to query, from one or more layer number adjustment conditions corresponding to a current scheduling layer number, a target layer number adjustment condition that the RI data and the CQI data meet, where a base station is configured to perform downlink scheduling on control information and data information within the current period according to the current scheduling layer number, the one or more layer number conversion conditions are in one-to-one correspondence with one or more scheduling layer numbers, and the one or more scheduling layer numbers are scheduling layer numbers to which the current scheduling layer number is allowed to be converted; and a first determination module, configured to determine a target scheduling layer number corresponding to the target layer number adjustment condition to be a scheduling layer number used by the base station within a target period, where the target period is a period after the current period.

According to another aspect of the embodiments of the present disclosure, a computer-readable storage medium is further provided, in which a computer program is stored. The computer program is configured to perform the above method for controlling the downlink scheduling of the base station when running.

According to another aspect of the embodiments of the present disclosure, an electronic apparatus is further provided, including: a memory, a processor, and a computer program stored in the memory and runnable on the processor. The processor performs the above method for controlling the downlink scheduling of the base station through the computer program.

In the present disclosure, when the base station performs downlink scheduling on the control information and the data information according to the current scheduling layer number within the current period, the RI data reported by the terminal and the CQI data corresponding to the CQI information are detected first, so as to obtain the target layer number adjustment condition according to the query of the RI data and the CQI data in one or more layer number adjustment conditions corresponding to the current scheduling layer number; and the target scheduling layer number corresponding to the target layer number condition is acquired according to the target layer number condition, and the target scheduling layer number is determined to be the scheduling layer number used by the base station within the target period after the current period. Since various factors such as the RI and the CQI information are comprehensively considered in the downlink scheduling process, the plurality of scheduling layer number adjustment conditions are set, and a target scheduling result of the base station is finally obtained comprehensively, so as to achieve the purpose of reducing the fluctuation of the terminal measurement information during the downlink scheduling of the base station, so that the fluctuation of the terminal data and the wireless channel is reduced, and then the problem in the related art of the fluctuation of the terminal data and the wireless channel being relatively significant during the downlink scheduling of the base station is solved, thereby achieving the technical effect of reducing the fluctuation of the terminal data and the wireless channel during the downlink scheduling of the base station.

### Brief Description of the Drawings

The accompanying drawings, which are incorporated in and constitute a part of this specification, illustrate embodiments consistent with the present disclosure and, together with the specification, serve to explain the principles of the present disclosure.

In order to more clearly illustrate the embodiments of the present disclosure or the technical solutions in the related art, the accompanying drawings used in the description of the embodiments or the related art will be briefly described below. It is apparent that other accompanying drawings may further be obtained by those of ordinary skill in the art according to these accompanying drawings without creative efforts.
Fig. 1 is a schematic diagram of a hardware environment of a method of controlling downlink scheduling of a base station according to an embodiment of the present disclosure.
Fig. 2 is a flowchart of a method of controlling downlink scheduling of a base station according to an embodiment of the present disclosure.
Fig. 3 is a schematic diagram of a state conversion model of downlink scheduling of a base station according to an embodiment of the present disclosure.
Fig. 4 is a schematic diagram of a process of controlling downlink scheduling of a base station according to an embodiment of the present disclosure.
Fig. 5 is a structural block diagram of an apparatus of controlling downlink scheduling of a base station according to an embodiment of the present disclosure.

### Detailed Description of the Embodiments

In order to enable those skilled in the art to better understand the solutions of the present disclosure, the technical solutions in the embodiments of the present disclosure will be clearly and completely described below in combination with the drawings in the embodiments of the present disclosure. It is apparent that the described embodiments are only part of the embodiments of the present disclosure, not all the embodiments. All other embodiments obtained by those of ordinary skill in the art on the basis of the embodiments in the present disclosure without creative work shall fall within the scope of protection of the present disclosure.

It is to be noted that the terms "first", "second" and the like in the specification, claims and the above drawings of the present disclosure are used for distinguishing similar objects rather than describing a specific sequence or a precedence order. It should be understood that the data used in such a way may be exchanged where appropriate, in order that the embodiments of the present disclosure described here can be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

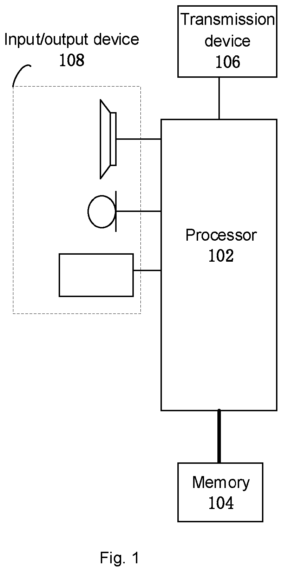

The method embodiment provided by the embodiments of the present disclosure may be performed in a computer terminal, a device terminal or a similar computing apparatus. Taking running on the computer terminal as an example, Fig. 1 is a schematic diagram of a hardware environment of a method of controlling downlink scheduling of a base station according to an embodiment of the present disclosure. As shown in Fig. 1, the computer terminal may include one or more (only one is shown in Fig. 1) processors 102 (the processors 102 may include, but are not limited to, a Micro Processor Unit (MCU) or a Field Programmable Gate Array (FPGA), and other processing devices), and a memory 104 configured to store data. In an exemplary embodiment, the computer terminal may further include a transmission device 106 with a communication function and an input/output device 108. Those of ordinary skill in the art may understand that the structure shown in Fig. 1 is only schematic and not intended to limit the structure of the computer terminal. For example, the computer terminal may further include more or fewer components than those shown in Fig. 1, or has a different configuration with equivalent or more functions than those shown in Fig. 1.

The memory 104 may be configured to store a computer program, for example, a software program of application software and modules, such as a computer program corresponding to a method for controlling downlink scheduling of a base station in the embodiments of the present disclosure. The processor 102 runs the computer program stored in the memory 104 to perform various functional applications and data processing, that is, to implement the above method. The memory 104 may include a high speed Random Access Memory (RAM) and may further include a non-volatile memory such as one or more magnetic storage apparatuses, a flash memory, or other non-volatile solid state memories. In some examples, the memory 104 may further include memories remotely set relative to the processor 102, which may be connected to the computer terminal through a network. Examples of the above network include, but are not limited to, the Internet, the Intranet, a local area network, a mobile communication network, and combinations thereof.

The transmission module 106 is configured to receive or transmit data through a network. A specific example of the network may include a wireless network provided by a communication provider of the computer terminal. In one example, the transmission device 106 includes a Network Interface Controller (NIC) that may be connected to other network devices through a base station to communicate with the Internet. In one example, the transmission device 106 may be an **RF** module, which is configured to communicate with the Internet in a wireless manner.

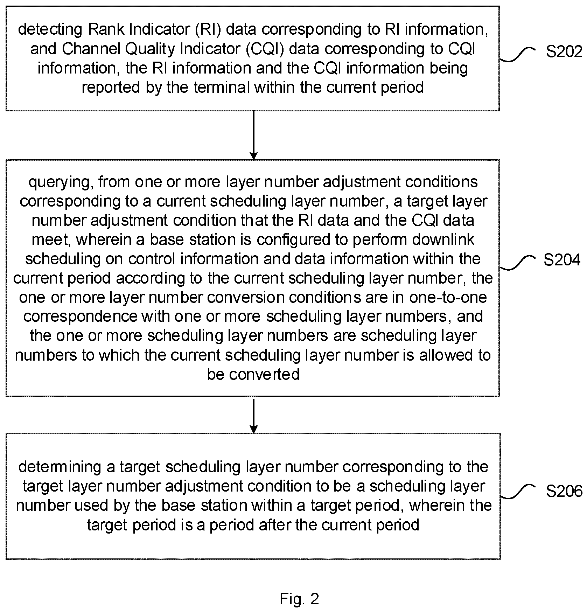

In the embodiment, a method for controlling downlink scheduling of a base station is provided, which is applied to the above computer terminal. Fig. 2 is a flowchart of a method of controlling downlink scheduling of a base station according to an embodiment of the present disclosure, and the flow includes the following steps.

At S202, RI data corresponding to RI, and CQI data corresponding to CQI information are detected, the RI information and the CQI information being reported by the terminal within the current period.

At S204, a target layer number adjustment condition that the RI data and the CQI data meet is queried from one or more layer number adjustment conditions corresponding to a current scheduling layer number, where a base station is configured to perform downlink scheduling on control information and data information within the current period according to the current scheduling layer number, the one or more layer number conversion conditions are in one-to-one correspondence with one or more scheduling layer numbers, and the one or more scheduling layer numbers are scheduling layer numbers to which the current scheduling layer number is allowed to be converted.

At S206, a target scheduling layer number corresponding to the target layer number adjustment condition is determined to be a scheduling layer number used by the base station within a target period, where the target period is a period after the current period.

Through the above steps, when the base station performs downlink scheduling on the control information and the data information according to the current scheduling layer number within the current period, the RI data reported by the terminal and the CQI data corresponding to the CQI information are detected first, so as to obtain the target layer number adjustment condition according to the query of the RI data and the CQI data in one or more layer number adjustment conditions corresponding to the current scheduling layer number; and the target scheduling layer number corresponding to the target layer number condition is acquired according to the target layer number condition, and the target scheduling layer number is determined to be the scheduling layer number used by the base station within the target period after the current period. Since various factors such as the RI and the CQI information are comprehensively considered in the downlink scheduling process, the plurality of scheduling layer number adjustment conditions are set, and a target scheduling result of the base station is finally obtained comprehensively, so as to achieve the purpose of reducing the fluctuation of the terminal measurement information during the downlink scheduling of the base station, so that the fluctuation of the terminal data and the wireless channel is reduced, and then the problem in the related art of the fluctuation of the terminal data and the wireless channel being relatively significant during the downlink scheduling of the base station is solved, thereby achieving the technical effect of reducing the fluctuation of the terminal data and the wireless channel during the downlink scheduling of the base station.

Optionally, in the embodiment, the above method for controlling the downlink scheduling of the base station may be applied to, but is not limited to, the base station. The function of implementing the method for controlling the downlink scheduling of the base station may be deployed on the base station or an independent control device, and then the device is connected to the base station to control the downlink scheduling of the base station.

In the technical solution provided in the above S202, the adjustment period of the scheduling layer number may be, but is not limited to, adjusted and configured according to different external conditions. For example, the period may be adjusted and configured to 5 s, 10 s, 15 s, 20 s, etc. according to different external conditions. In the embodiment, the period being 5 s is taken as an example for description.

Optionally, in the embodiment, the terminal may include, but is not limited to, a mobile phone, a computer, a server, a network device, etc.

Optionally, in the embodiment, the RI may, but is not limited to, represent the rank of a transmission channel in an MIMO system, may be regarded as the number of independent parallel channels on a transmission path between transceiver devices, and may represent the correlation between a plurality of transmission channels between a transmitting end and a receiving end.

Optionally, in the embodiment, the CQI information may be, but is not limited to, indication information indicating channel quality, represents the quality of the current channel, and corresponds to a signal-to-noise ratio of the channel. In the embodiment of the present disclosure, the value range may be 1 to 15.

Optionally, in the embodiment, the terminal reports the RI, the CQI information, and other information to the base station. The above information reported by the terminal may be processed (such as performing statistics on corresponding parameters) according to, but not limited to, the configuration of subsequent layer number adjustment conditions and the basis of determination for layer number adjustment to obtain the RI data and the CQI data.

Optionally, in one exemplary embodiment, the RI data corresponding to the RI, which is reported by the terminal within the current period, and the CQI data corresponding to the CQI information may be detected in the following manner that includes, but is not limited to: receiving the RI information reported by the terminal within the current period; recording times of occurrences of each RI parameter value in the RI information and RI reporting total times to obtain RI reporting total times, and each RI parameter value and reporting times with a corresponding relationship as the RI data; receiving the CQI information reported by the terminal within the current period; and recording the number of CQI parameters in the CQI information falling into each of a plurality of CQI intervals and CQI reporting total times to obtain CQI reporting total times, and the CQI intervals and the number of CQI parameters in the CQI information falling into each of a plurality of CQI intervals with a corresponding relationship as the CQI data.

Optionally, in the embodiment, the terminal reports the RI to the base station according to a protocol specification, and the number of RI parameter values reported by the terminal may be counted in the current period (i.e., the set layer number adjustment period), for example, the RI reported by the terminal within the current period is 1, 1, 2, 3, 4, 4, 1, 1, 1, 2, respectively. Then, the total RI reporting times may be recorded as 10, and the corresponding relationship between the RI parameter values and the reporting times is as follows: the value 1 corresponds to 5 times, the value 2 corresponds to 2 times, the value 3 corresponds to 1 time, and the value 4 corresponds to 2 times, thereby obtaining the RI data.

Optionally, in the embodiment, the terminal reports the CQI information to the base station according to the protocol specification, and the number of CQI parameter values reported by the terminal may be counted within the current period (i.e., the set layer number adjustment period). In order to simplify the statistical process, the CQI values may be divided into different CQI intervals, and the number of CQI values reported by the terminal that fall into each interval and the total CQI reporting times are counted as the CQI data.

In one exemplary embodiment, the number of times each RI parameter takes the value in the RI may be recorded to obtain the RI parameter values and the reporting times having a calculating times of occurrences of each integer from 1 to N in the RI information reported by the terminal within the current period and the RI reporting total times to obtain the RI reporting total times, and the each RI parameter value and RI reporting times with a corresponding relationship as the RI data, wherein the N is the number of downlink radio frequency (RF) antennas of the base station.

Optionally, in the embodiment, the RI parameter value is related to the number of downlink RF antennas of the base station. For example, if the number of downlink RF antennas of the base station is 4, the RI value may be 1, 2, 3, or 4.

Optionally, in the embodiment, the number of downlink RF antennas of the base station being 4 (i.e., N=4) is taken as an example for description, and in the accumulation process, statistics may be performed to obtain Table 1.

**Table 1**

| Statistical variable | RI statistical data |
|---|---|
| RI1_REPORT_NUM | Number of times the RI is reported as 1 during the statistical period |
| RI2_REPORT_NUM | Number of times the RI is reported as 2 during the statistical period |
| RI3_REPORT_NUM | Number of times the RI is reported as 3 during the statistical period |
| RI4_REPORT_NUM | Number of times the RI is reported as 4 during the statistical period |

Optionally, in the embodiment, as shown in Table 1, a variable may be set for each RI value, RI1_REPORT_NUM is a variable for counting the number of times the RI value is 1, RI2_REPORT_NUM is a variable for counting the number of times the RI value is 2, RI3_REPORT_NUM is a variable for counting the number of times the RI value is 3, and RI4_REPORT_NUM is a variable for counting the number of times the RI value is 4. The total RI reporting times may be expressed as RI1_REPORT_NUM+RI2_REPORT_NUM+RI3_REPORT_NUM+RI4_REPORT_NUM.

Optionally, in one exemplary embodiment, the number of CQI parameters in the CQI information falling into each of the plurality of CQI intervals and the total CQI reporting times may be recorded to obtain the total CQI reporting times, and the CQI intervals and the falling numbers with a corresponding relationship as the CQI data in the following manner that includes, but is not limited to: recording the number of CQI parameters in the CQI information falling into each of the plurality of CQI intervals and the CQI reporting total times to obtain the CQI reporting total times ,and the CQI intervals and the number of CQI parameters in the CQI information falling into each of a plurality of CQI intervals as the CQI data.

Optionally, in the embodiment, the CQI value range may be, but is not limited to, 1 to 15, and the value range may be divided into a corresponding number of intervals according to the number of downlink **RF** antennas of the base station. For example, if the number of downlink **RF** antennas of the base station is 4, 1 to 15 may be divided into four intervals by setting three threshold values.

For example, the statistical variables of the three threshold values are set to CQI_THRESHOLD_ONE, CQI_THRESHOLD_TWO, and CQI_THRESHOLD_THREE, respectively, and the values of the thresholds are respectively configured to obtain Table 2.

**Table 2**

| Statistical variable | CQI interval setting |
|---|---|
| CQI_THRESHOLD_ONE | CQI statistics threshold 1, adjustable, default value 3 |
| CQI_THRESHOLD_TWO | CQI statistics threshold 2, adjustable, default value 5 |
| CQI_THRESHOLD_THREE | CQI statistics threshold 3, adjustable, default value 9 |

Optionally, in the embodiment, the number of downlink RF antennas of the base station being 4 (i.e., N=4) and the setting of the above threshold value is taken as an example for description, and the CQI intervals and the falling number having a corresponding relationship shown in Table 3 may be obtained.

**Table 3**

| Statistical variable | CQI statistical data |
|---|---|
| CQI_THRESHOLD_NUM1 | Number of times the CQI reported is less than CQI_THRESHOLD_ONE during the statistical period |
| CQI_THRESHOLD_NUM2 | Number of times the CQI reported is in a [CQI_THRESHOLD_ONE, CQI_THRESHOLD_TWO] interval during the statistical period |
| CQI_THRESHOLD_NUM3 | Number of times the CQI reported is in a [CQI_THRESHOLD_TWO, CQI_THRESHOLD_THREE] interval during the statistical period |
| CQI_THRESHOLD_NUM4 | Number of times the CQI reported is greater than CQI_THRESHOLD_THREE during the statistical period |

Optionally, in the embodiment, the total CQI reporting times may be expressed as CQI_THRESHOLD_NUM1+CQI_THRESHOLD_NUM2+CQI_THRESHOLD_NUM3+CQI_THRES HOLD_NUM4; the CQI intervals and the falling numbers having a corresponding relationship as the CQI data may be expressed as follows: CQI_THRESHOLD_NUM1 corresponds to the number of times the CQI reported is less than CQI_THRESHOLD_ONE during the statistical period; CQI_THRESHOLD_NUM2 corresponds to the number of times the CQI reported is in the [CQI_THRESHOLD_ONE, CQI_THRESHOLD_TWO] interval during the statistical period; CQI_THRESHOLD_NUM3 corresponds to the number of times the CQI reported is in the [CQI_THRESHOLD_TWO, CQI_THRESHOLD_THREE] interval during the statistical period; CQI THRESHOLD_NUM4 corresponds to the number of times the CQI reported is greater than CQI_THRESHOLD_THREE during the statistical period.

In the technical solution provided in the above S204, the different current scheduling layer numbers correspond to the different scheduling layer numbers that are allowed to be converted, which may be all other scheduling layer numbers except the current scheduling layer number, or some other scheduling layer numbers except the current scheduling layer number. For example, the scheduling layer number may be 1, 2, 3, and 4. If the current scheduling layer number is 1, the corresponding scheduling layer number that is allowed to be converted may be 2, 3, 4, or 2, 3, or 3, 4, or only 2, only 3, or only 4.

Optionally, in the embodiment, the conversion between the different layer numbers may correspond to different layer number adjustment conditions, so that the converted scheduling layer number is more in line with the network communication conditions.

Optionally, in the embodiment, a state machine implementation mechanism is introduced for the conversion between the scheduling layer numbers, so that the implementation of a scheduling strategy is more simply and easily implemented. The scheduling layer number is configured as the state machine, and the layer number adjustment condition is configured as a constraint condition for the conversion between the state machines to construct a state conversion model. The state conversion model may be used to automatically perform conversion scheduling on the scheduling layer number.

In the embodiment, the number of downlink **RF** antennas of the base station being 4 is taken as an example for description. It is to be noted that other numbers of antennas may mainly affect the increase in the number of state machines and the increase in threshold information, but may not affect the basic design principle and implementation.

Optionally, in the embodiment, four scheduling layer numbers may be determined according to, but is not limited to, the number of antennas, and four pieces of state machine scheduling information may be designed to obtain an optional state machine and the scheduling layer number having a corresponding relationship as shown in Table 4.

**Table 4**

| State machine | State value | Scheduling data |
|---|---|---|
| S1 | LAYER1_SCHE_ST ATE | The base station schedules the control information and the data information according to layer 1 information |
| S2 | LAYER2_SCHE_ST ATE | The base station schedules the control information and the data information according to layer 2 information |
| S3 | LAYER3_SCHE_ST ATE | The base station schedules the control information and the data information according to layer 3 information |
| S4 | LAYER4_SCHE_ST ATE | The base station schedules the control information and the data information according to layer 4 information |

Optionally, in the embodiment, as shown in Table 4, if the state machine corresponding to the current scheduling layer number is S1, the base station performs downlink scheduling on the control information and the data information according to the layer 1 information within the current period, and if S1 jumps to S2, it is queried, from one or more layer number adjustment conditions corresponding to S1 (current scheduling layer number), whether the RI data and the CQI data meet the layer number adjustment conditions from S1 to S2 (target layer number).

In one exemplary embodiment, the target layer number adjustment condition that the RI data and the CQI data meet may be queried from one or more layer number adjustment conditions corresponding to the current scheduling layer number in the following manner that includes, but is not limited to: taking the current scheduling layer number as a current state, and acquiring, from a state conversion model, a constraint condition corresponding to each of one or more reference states corresponding to the current state to obtain one or more constraint conditions, wherein the state conversion model records state conversion relationships each being between scheduling layer numbers allowed to be used by the base station and constraint conditions that each of the state conversion relationship needs to meet, each of the one or more reference states is state having one of the state conversion relationships with the current state, each of the one or more reference state corresponding to one scheduling layer number to which the current scheduling layer number is allowed to be converted, and the one or more layer number adjustment conditions comprise the one or more constraint conditions; and acquiring, from the one or more constraint conditions, a target constraint condition that the RI data and the CQI data meet as the target layer number adjustment condition.

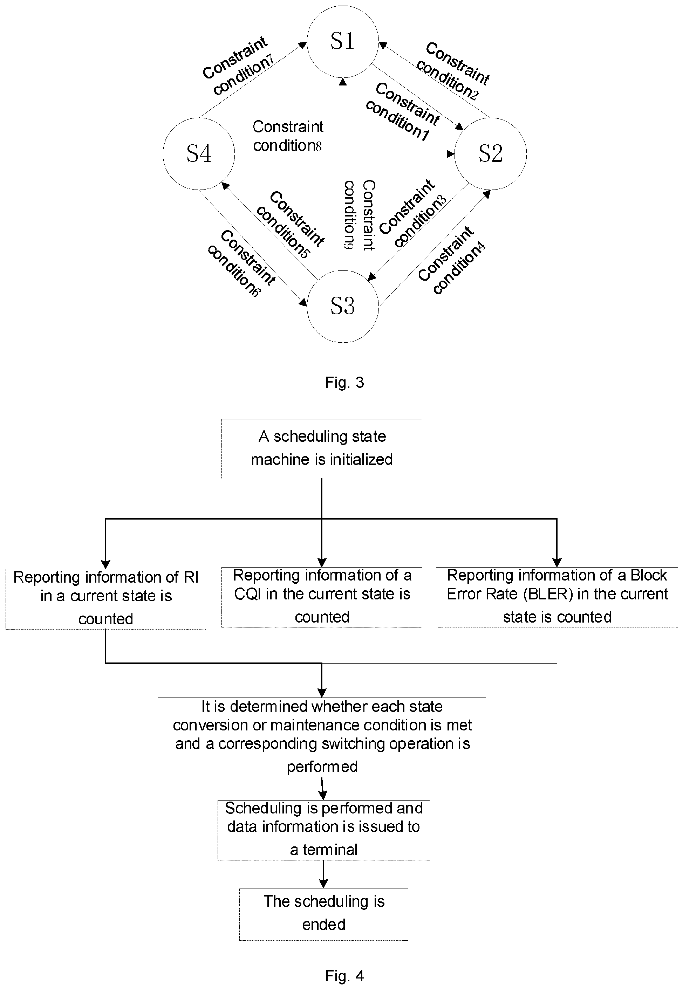

Optionally, in the embodiment, Fig. 3 is a schematic diagram of a state conversion model for downlink scheduling of a base station according to an embodiment of the present disclosure. As shown in Fig. 3, if the current scheduling layer number is 1, the current scheduling layer number is the current state S1, and the constraint condition corresponding to the reference state S2 corresponding to the current state S1 is acquired from the state conversion model to obtain a constraint condition 1; if the current scheduling layer number is 2, the current scheduling layer number is the current state S2, and the constraint conditions corresponding to the two reference states S1 and S3 corresponding to the current state S2 are acquired from the state conversion model to obtain a constraint condition 2 and a constraint condition 3 respectively; if the current scheduling layer number is 3, the current scheduling layer number is the current state S3, and the three reference states S1, S2 and S4 corresponding to the current state S3 are acquired from the state conversion model to obtain a constraint condition 4, a constraint condition 5, and a constraint condition 9 respectively; and if the current scheduling layer number is 4, the current scheduling layer number is the current state S4, and the three reference states S1, S2 and S3 corresponding to the current state S4 are acquired from the state conversion model to obtain a constraint condition 7, a constraint condition 8, and a constraint condition 6 respectively.

Optionally, in the embodiment, based on the principle that the more scheduling layer numbers, the higher the requirements for channel conditions and demodulation performance, the strategy of "slow rise and fast fall" may be used, but is not limited thereto. During the state conversion, S1 to S2 to S3 to S4 uses a progressive step-by-step increase, and vice versa, a jumpable adjustment state is used, that is, S1 can only be adjusted upward step by step, and the downward adjustment of S3 and S4 is not subject to the decreasing rule.

In one exemplary embodiment, the constraint condition corresponding to each of one or more reference states corresponding to the current state may be acquired from the state conversion model to obtain one or more constraint conditions in the following manner that includes, but is not limited to: in a case where the current state is a layer p state wherein the minimum layer number is p, acquiring a reference state as a layer p+1 state, wherein the constraint condition corresponding to the layer p+1 state is to meet following two branches at the same time: a first branch: a ratio of RI_REPORT_NUMp to RI_REPORT_TOTAL_NUM being less than a first threshold; and a second branch: a ratio of CQI_THRESHOLD_NUMp to CQI_THRESHOLD_TOTAL_NUM being less than a second threshold, where the RI_REPORT_NUMp is RI reporting times of a RI parameter value corresponding to the minimum layer number, the RI_REPORT_TOTAL_NUM is RI reporting total times, the RI data comprises the RI reporting total times within the current period , and the RI parameter values and the RI reporting times with a corresponding relationship, the CQI_THRESHOLD_NUMp is a CQI falling number in a CQI interval corresponding to the minimum layer number, the CQI_THRESHOLD_TOTAL_NUM is CQI reporting total times, and the CQI data comprises the CQI reporting total times within the current period ,and the CQI interval and the CQI falling number with a corresponding relationship as the CQI data.

Optionally, in the embodiment, taking the current state being the state (i.e., S1) of the minimum layer number 1 as an example, the reference state is acquired as the layer 2 state (i.e., S2), and then the constraint condition corresponding to S2 meets the following two branches at the same time.

The first branch: (RI1_REPORT_NUM/RI_REPORT_TOTAL_NUM)*100<20 (i.e., the first threshold), where RI_REPORT_TOTAL_NU=(RI1_REPORT_NUM+RI2_REPORT_NUM+RI3_REPORT_NUM+RI4_ REPORT_NUM);
and the second branch: (CQI_THRESHOLD_NUM1/CQI_THRESHOLD_TOTAL_NUM)*100<10 (i.e., the second threshold), where
CQI_THRESHOLD_TOTAL_NUM=(CQI_THRESHOLD_NUM1+CQI_THRESHOLD_NUM2+CQI_ THRESHOLD_NUM3+CQI_THRESHOLD_NUM4).

In one exemplary embodiment, the constraint condition corresponding to each of one or more reference states corresponding to the current state may be acquired from the state conversion model to obtain one or more constraint conditions in the following manner that includes, but is not limited to: in a case where the current state is a layer q state wherein an intermediate layer number is q except for the minimum layer number and the maximum layer number, acquiring a reference state as a layer q+1 state and a layer t state, wherein a constraint condition corresponding to the layer q+1 state is to meet following two branches at the same time: a third branch: a ratio of RI_REPORT_NUMq to RI_REPORT_TOTAL_NUM being greater than or equal to a third threshold; and a fourth branch: a ratio of CQI_THRESHOLD_NUMq to CQI_THRESHOLD_TOTAL_NUM being greater than or equal to a fourth threshold, where the RI_REPORT_NUMq is the sum of RI reporting times of RI parameter values corresponding to all layer numbers greater than q, the RI_REPORT_TOTAL_NUM is RI reporting total times, the RI data comprises RI reporting total times within the current period ,and the RI parameter values and the RI reporting times with a corresponding relationship, the CQI_THRESHOLD_NUMq is the sum of CQI falling numbers in CQI intervals corresponding to all layer numbers greater than q, the CQI_THRESHOLD_TOTAL_NUM is reporting total times, and the CQI data comprises CQI reporting total times within the current period, and the CQI intervals and the CQI falling numbers with a corresponding relationship; t is all layer numbers less than q, and a constraint condition corresponding to the layer t state is to meet one of following three branches: a fifth branch: a ratio of RI_REPORT_NUMt to RI_REPORT_TOTAL_NUM being greater than a fifth threshold; a sixth branch: a ratio of CQI_THRESHOLD_NUMt to CQI_THRESHOLD_TOTAL_NUM being greater than a sixth threshold; and a seventh branch: LAYER_SCHE_BLERq being greater than the sum of LAYER_SCHE_BLERt and A*BLER_DELTA, where the RI_REPORT_NUMt is the sum of RI reporting times of RI parameter values corresponding to all layer numbers less than or equal to t, the CQI_THRESHOLD_NUMt is the sum of CQI falling numbers in CQI intervals corresponding to all layer numbers less than or equal to t, the LAYER_SCHE_BLERq is downlink Block Error Rate (BLER) information during a layer q scheduling, the LAYER_SCHE_BLERt is downlink BLER information during a layer t scheduling, the A is a difference between q and t, and the BLER_DELTA is a preset BLER change threshold.

Optionally, in the embodiment, the BLER information may be, but is not limited to, statistically used as posterior information to determine the scheduling effect of the current state, and provide a reference basis for feedback determination for the next state conversion. Information statistics in different states is mainly performed in percentage units, and a BLER change threshold is added.

Optionally, in the embodiment, BLER statistical variables and BLER statistical information having a corresponding relationship are shown in Table 5.

**Table 5**

| Statistical variable | BLER statistical data |
|---|---|
| LAYER1_SCHE_BLER | Downlink BLER statistical information during layer 1 scheduling within the statistical period |
| LAYER2_SCHE_BLER | Downlink BLER statistical information during layer 2 scheduling within the statistical period |
| LAYER3_SCHE_BLER | Downlink BLER statistical information during layer 3 scheduling within the statistical period |
| LAYER4_SCHE_BLER | Downlink BLER statistical information during layer 4 scheduling within the statistical period |

Optionally, in the embodiment, BLER_DELTA may represent, but is not limited to, a BLER change threshold parameter, and may use a percentage value to keep consistent with the BLER statistical information, and the default value may be 3.

Optionally, in the embodiment, taking the current state being the state S2 (i.e., layer q) at the intermediate layer number 2 except for the minimum layer number and the maximum layer number as an example, the reference state is acquired as the layer 3 state S3 (i.e., layer q+1), then the constraint condition corresponding to S2 meets the following two branches at the same time.

The conversion from the state S2 to S3 needs to meet the following two branches at the same time.

The third branch is: ((RI3_REPORT_NUM+RI4_REPORT_NUM)/RI_REPORT_TOTAL_NUM)*100>=80 (i.e., the third threshold) within the statistical period.

The fourth branch is: ((CQI_THRESHOLD_NUMS3+CQI_THRESHOLD_NUM4)/CQI_THRESHOLD_TOTAL_NUM)*100> =90 (i.e., the fourth threshold) within the statistical period.

Optionally, in the embodiment, taking the current state being the state S2 (i.e., layer q) at the intermediate layer number 2 except for the minimum layer number and the maximum layer number as an example, the reference state is acquired as the layer 1 state S1 (i.e., layer t), then the constraint condition corresponding to S1 meets one of the following three branches at the same time.

If the conversion from the state S2 to S1 meets one of the following three branches, a conversion operation is performed.

The fifth branch is: (RI1_REPORT_NUM/RI_REPORT_TOTAL_NUM)*100>20 (i.e., the fifth threshold) within the statistical period;

The sixth branch is: (CQI_THRESHOLD_NUM1/CQI_THRESHOLD_TOTAL_NUM)*100>10 (i.e., the sixth threshold) within the statistical period.

The seventh branch is: LAYER2_SCHE_BLER>(LAYER1_SCHE_BLER+BLER_DELTA) within the statistical period.

Optionally, in the embodiment, taking the current state being the state S3 (i.e., layer q) at the intermediate layer number 3 except for the minimum layer number and the maximum layer number as an example, the reference state is acquired as the layer 4 state S4 (i.e., layer q+1), then the constraint condition corresponding to S4 meets the following two branches at the same time.

The conversion from the state S3 to S4 needs to meet the following two branches at the same time.

The third branch is: (RI4_REPORT_NUM/RI_REPORT_TOTAL_NUM)*100>=80 (i.e., the third threshold) within the statistical period.

The fourth branch is: (CQI_THRESHOLD_NUM4/CQI_THRESHOLD_TOTAL_NUM)*100>=90 (i.e., the fourth threshold) within the statistical period.

Optionally, in the embodiment, taking the current state being the state S3 (i.e., layer q) at the intermediate layer number 3 except for the minimum layer number and the maximum layer number as an example, the reference state is acquired as the layer 1 state S1 (i.e., layer t), then the constraint condition corresponding to S1 meets one of the following three branches at the same time.

If the conversion from the state S3 to S1 meets one of the following three branches, a conversion operation is performed.

The fifth branch is: (RI1_REPORT_NUM/RI_REPORT_TOTAL_NUM)*100>20 (i.e., the fifth threshold) within the statistical period.

The sixth branch is: (CQI_THRESHOLD_NUM1/CQI_THRESHOLD_TOTAL_NUM)*100>10 (i.e., the sixth threshold) within the statistical period.

The seventh branch is: LAYER3_SCHE_BLER>(LAYER1_SCHE_BLER+2*BLER_DELTA) within the statistical period.

Optionally, in the embodiment, taking the current state being the state S3 (i.e., layer q) at the intermediate layer number 3 except for the minimum layer number and the maximum layer number as an example, the reference state is acquired as the layer 2 state S2 (i.e., layer t), then the constraint condition corresponding to S2 meets one of the following three branches at the same time.

If the conversion from the state S3 to S2 meets one of the following three branches, a conversion operation is performed.

The fifth branch is: ((RI1_REPORT_NUM+RI2_REPORT_NUM)/RI_REPORT_TOTAL_NUM)*100>20 (i.e., the fifth threshold) within the statistical period.

The sixth branch is: (CQI_THRESHOLD_NUM1+ CQI_THRESHOLD_NUM2/CQI_THRESHOLD_TOTAL_NUM)*100>10 (i.e., the sixth threshold) within the statistical period.

The seventh branch is: LAYER3_SCHE_BLER>(LAYER2_SCHE_BLER+BLER_DELTA) within the statistical period.

Optionally, in the embodiment, it is to be noted that the conversion from S3 to S1 may be, but is not limited to, precede the determination processing of the conversion from the state S3 to S2, so as to achieve a scheduling effect of "slow rise and fast fall".

In one exemplary embodiment, the constraint condition corresponding to each of one or more reference states corresponding to the current state may be acquired from the state conversion model to obtain one or more constraint conditions in the following manner that includes, but is not limited to: in a case where the current state is a layer m state wherein the maximum layer number is m, acquiring a reference state as a layer r state, wherein r is all layer numbers less than m, and a constraint condition corresponding to the layer r state is to meet one of following three branches: an eighth branch: a ratio of RI_REPORT_NUMr to RI_REPORT_TOTAL_NUM being greater than a seventh threshold; a ninth branch: a ratio of CQI_THRESHOLD_NUMr to CQI_THRESHOLD_TOTAL_NUM being greater than an eighth threshold; and a tenth branch: LAYER_SCHE_BLERm being greater than the sum of LAYER_SCHE_BLERr and B*BLER_DELTA, where the RI_REPORT_NUMr is the sum of RI reporting times of RI parameter values corresponding to all layer numbers less than or equal to the r, the RI_REPORT_TOTAL_NUM is RI reporting total times, the RI data comprises RI reporting total times within the current period,and the RI parameter values and the RI reporting times with a corresponding relationship, CQI_THRESHOLD_NUMr is the sum of CQI falling numbers in CQI intervals corresponding to all layer numbers less than or equal to r, the CQI_THRESHOLD_TOTAL_NUM is CQI reporting total times, the CQI data comprises CQI reporting total times within the current period ,and the CQI intervals and the CQI falling numbers with a corresponding relationship , the LAYER_SCHE_BLERm is downlink BLER information during a layer m scheduling, the LAYER_SCHE_BLERr is downlink BLER information during a layer r scheduling, the B is a difference between m and r, and the BLER_DELTA is a preset BLER change threshold.

Optionally, in the embodiment, taking the current state being the state S4 (i.e., layer m) at the maximum layer number 4 as an example, the reference state is acquired as the layer 1 state S1 (i.e., layer r), then the constraint condition corresponding to S1 meets one of the following three branches at the same time.

If the conversion from the state S4 to S1 meets one of the following three branches, a conversion operation is performed.

The eighth branch is: (RI1_REPORT_NUM/RI_REPORT_TOTAL_NUM)*100>20 (i.e., the seventh threshold) within the statistical period.

The ninth branch is: (CQI_THRESHOLD_NUM1/CQI_THRESHOLD_TOTAL_NUM)*100>10 (i.e., the eighth threshold) within the statistical period.

The tenth branch is: LAYER4_SCHE_BLER>(LAYER1_SCHE_BLER+3*BLER_DELTA) within the statistical period.

Optionally, in the embodiment, taking the current state being the state S4 (i.e., layer m) at the maximum layer number 4 as an example, the reference state is acquired as the layer 2 state S2 (i.e., layer r), then the constraint condition corresponding to S2 meets one of the following three branches at the same time.

If the conversion from the state S4 to S2 meets one of the following three branches, a conversion operation is performed.

The eighth branch is: ((RI1_REPORT_NUM+RI2_REPORT_NUM)/RI_REPORT_TOTAL_NUM)*100>20 (i.e., the seventh threshold) within the statistical period.

The ninth branch is: (CQI_THRESHOLD_NUM1+ CQI_THRESHOLD_NUM2/CQI_THRESHOLD_TOTAL_NUM)*100>10 (i.e., the eighth threshold) within the statistical period.

The tenth branch is: LAYER4_SCHE_BLER>(LAYER2_SCHE_BLER+2*BLER_DELTA) within the statistical period.

Optionally, in the embodiment, taking the current state being the state S4 (i.e., layer m) at the maximum layer number 4 as an example, the reference state is acquired as the layer 3 state S2 (i.e., layer r), then the constraint condition corresponding to S3 meets one of the following three branches at the same time.

If the conversion from the state S4 to S3 meets one of the following three branches, a conversion operation is performed.

The eighth branch is: ((RI1_REPORT_NUM+RI2_REPORT_NUM+RI3_REPORT_NUM)/RI_REPORT_TOTAL_NUM)*10 0>20 (i.e., the seventh threshold) within the statistical period.

The ninth branch is: ((CQI_THRESHOLD_NUM1+CQI_THRESHOLD_NUM2+CQI_THRESHOLD_NUM3)/CQI_THRE SHOLD_TOTAL_NUM)*100>10 (i.e., the eighth threshold) within the statistical period.

The tenth branch is: LAYER4_SCHE_BLER>(LAYER3_SCHE_BLER+BLER_DELTA) within the statistical period.

Optionally, in the embodiment, it is to be noted that the conversion from S4 to S1 may be, but is not limited to, precede determination of the conversion from the state S4 to S2, and the conversion from S4 to S2 may be, but is not limited to, precede determination of the conversion from S4 to S1.

In one exemplary embodiment, after the target layer number adjustment condition that the RI data and CQI data meet is queried from one or more layer number adjustment conditions corresponding to the current scheduling layer number, the method uses the following manner that includes, but is not limited to: in a case where the target layer number conversion condition is not queried, determining the current scheduling layer number to be the scheduling layer number used by the base station within the target period.

Optionally, in the embodiment, taking the initialization state being S1 as an example for description, when the state maintaining conditions of S1, S2, S3, and S4 do not meet the constraint condition (i.e., the target layer number adjustment condition) corresponding to each of one or more reference states corresponding to the aforementioned current state, the current state is maintained (that is, the current scheduling layer number is determined to be the scheduling layer number used by the base station within the target period). At the same time, the statistical update in the corresponding state only retains the statistical information of the most recent period.

In one optional implementation, an optional model architecture for a process of controlling the downlink scheduling of the base station is provided. Fig. 4 is a schematic diagram of a process of controlling downlink scheduling of a base station according to an embodiment of the present disclosure. As shown in Fig. 4, a scheduling state machine is first initialized, then reporting information of RI, a CQI, and a BLER in a current state is counted respectively, it is determined whether each state conversion or maintenance condition is met and a corresponding switching operation is performed, scheduling is performed, data information is sent to a terminal, and finally the scheduling is ended.

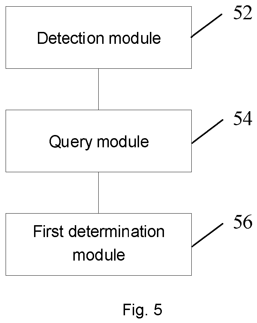

In the embodiment, an apparatus of controlling downlink scheduling of a base station is further provided. Fig. 5 is a structural block diagram of an apparatus of controlling downlink scheduling of a base station according to an embodiment of the present disclosure. As shown in Fig. 5, the apparatus includes: a detection module 52, a query module 54, and a first determination module 56.

The detection module 52 is configured to detect RI data corresponding to RI information, and Channel Quality Indicator (CQI) data corresponding to CQI information, the RI information and the CQI information being reported by a terminal within a current period.

The query module 54 is configured to query, from one or more layer number adjustment conditions corresponding to a current scheduling layer number, a target layer number adjustment condition that the RI data and the CQI data meet, where a base station is configured to perform downlink scheduling on control information and data information within the current period according to the current scheduling layer number, the one or more layer number conversion conditions are in one-to-one correspondence with one or more scheduling layer numbers, and the one or more scheduling layer numbers are scheduling layer numbers to which the current scheduling layer number is allowed to be converted.

The first determination module 56 is configured to determine a target scheduling layer number corresponding to the target layer number adjustment condition to be a scheduling layer number used by the base station within a target period, where the target period is a period after the current period.

Through the above apparatus, when the base station performs downlink scheduling on the control information and the data information according to the current scheduling layer number within the current period, the RI data reported by the terminal and the CQI data corresponding to the CQI information are detected first, so as to obtain the target layer number adjustment condition according to the query of the RI data and the CQI data in one or more layer number adjustment conditions corresponding to the current scheduling layer number; and the target scheduling layer number corresponding to the target layer number condition is acquired according to the target layer number condition, and the target scheduling layer number is determined to be the scheduling layer number used by the base station within the target period after the current period. Since various factors such as the RI and the CQI information are comprehensively considered in the downlink scheduling process, the plurality of scheduling layer number adjustment conditions are set, and a target scheduling result of the base station is finally obtained comprehensively, so as to achieve the purpose of reducing the fluctuation of the terminal measurement information during the downlink scheduling of the base station, so that the fluctuation of the terminal data and the wireless channel is reduced, and then the problem in the related art of the fluctuation of the terminal data and the wireless channel being relatively significant during the downlink scheduling of the base station is solved, thereby achieving the technical effect of reducing the fluctuation of the terminal data and the wireless channel during the downlink scheduling of the base station. In one exemplary embodiment, the detection module includes: a first receiving unit and a second receiving unit.

The first receiving unit is configured to receive the RI information reported by the terminal within the current period; and record times each RI parameter value in the RI information and RI reporting total times to obtain RI reporting total times, and each RI parameter value and reporting times with a corresponding relationship as the RI data.

The second receiving unit is configured to receive the CQI information reported by the terminal within the current period; and record the number of CQI parameters in the CQI information falling into each of a plurality of CQI intervals and CQI reporting total times to obtain CQI reporting total times , and the CQI intervals and the number of CQI parameters in the CQI information falling into each of a plurality of CQI intervals with a corresponding relationship as the CQI data.

In one exemplary embodiment, the first receiving unit is configured to:
calculate times of occurrences of each integer from 1 to N in the RI information reported by the terminal within the current period and the RI reporting total times to obtain the RI reporting total times, and the each RI parameter value and RI reporting times with a corresponding relationship as the RI data, wherein the N is the number of downlink radio frequency (RF) antennas of the base station.

In one exemplary embodiment, the second receiving unit is configured to:
record the number of CQI parameters in the CQI information falling into each of the plurality of CQI intervals and the CQI reporting total times to obtain the CQI reporting total times ,and the CQI intervals and the number of CQI parameters in the CQI information falling into each of a plurality of CQI intervals as the CQI date.

In one exemplary embodiment, the query module includes: a first acquisition unit and a second acquisition unit.

The first acquisition unit is configured to take the current scheduling layer number as a current state, and acquire, from a state conversion model, a constraint condition corresponding to each of one or more reference states corresponding to the current state to obtain one or more constraint conditions, where the state conversion model records state conversion relationships each being between scheduling layer numbers allowed to be used by the base station and constraint conditions that each of the state conversion relationship needs to meet, each of the one or more reference states is state having one of the state conversion relationships with the current state, each of the one or more reference state corresponding to one scheduling layer number to which the current scheduling layer number is allowed to be converted, and the one or more layer number adjustment conditions comprise the one or more constraint conditions.

The second acquisition unit is configured to acquire, from the one or more constraint conditions, a target constraint condition that the RI data and the CQI data meet as the target layer number adjustment condition.

In one exemplary embodiment, the first acquisition unit is configured to:
acquire, in a case where the current state is a layer p state wherein the minimum layer number is p, a reference state as a layer p+1 state, where the constraint condition corresponding to the layer p+1 state is to meet following two branches at the same time.

A first branch is that: a ratio of RI_REPORT_NUMp to RI_REPORT_TOTAL_NUM is less than a first threshold; and a second branch is that: a ratio of CQI_THRESHOLD_NUMp to CQI_THRESHOLD_TOTAL_NUM is less than a second threshold.
the RI_REPORT_NUMp is RI reporting times of a RI parameter value corresponding to the minimum layer number, the RI_REPORT_TOTAL_NUM is RI reporting total times, the RI data comprises the RI reporting total times within the current period , and the RI parameter values and the RI reporting times with a corresponding relationship, the CQI_THRESHOLD_NUMp is a CQI falling number in a CQI interval corresponding to the minimum layer number, the CQI_THRESHOLD_TOTAL_NUM is CQI reporting total times, and the CQI data comprises the CQI reporting total times within the current period ,and the CQI interval and the CQI falling number with a corresponding relationship as the CQI data.

In one exemplary embodiment, the first acquisition unit is configured to:
acquire, in a case where the current state is a layer q state wherein an intermediate layer number is q except for the minimum layer number and the maximum layer number, a reference state as a layer q+1 state and a layer t state, wherein a constraint condition corresponding to the layer q+1 state is to meet following two branches at the same time.

A third branch is that: a ratio of RI_REPORT_NUMq to RI_REPORT_TOTAL_NUM is greater than or equal to a third threshold; and a fourth branch is that: a ratio of CQI_THRESHOLD_NUMq to CQI_THRESHOLD_TOTAL_NUM is greater than or equal to a fourth threshold.
the RI_REPORT_NUMq is the sum of RI reporting times of RI parameter values corresponding to all layer numbers greater than q, the RI_REPORT_TOTAL_NUM is RI reporting total times, the RI data comprises RI reporting total times within the current period ,and the RI parameter values and the RI reporting times with a corresponding relationship, the CQI_THRESHOLD_NUMq is the sum of CQI falling numbers in CQI intervals corresponding to all layer numbers greater than q, the CQI_THRESHOLD_TOTAL_NUM is reporting total times, and the CQI data comprises CQI reporting total times within the current period, and the CQI intervals and the CQI falling numbers with a corresponding relationship .

Herein, t is all layer numbers less than q, and a constraint condition corresponding to the layer t state is to meet one of following three branches.

A fifth branch is that: a ratio of RI_REPORT_NUMt to RI_REPORT_TOTAL_NUM is greater than a fifth threshold; a sixth branch is that: a ratio of CQI_THRESHOLD_NUMt to CQI_THRESHOLD_TOTAL_NUM is greater than a sixth threshold; and a seventh branch is that: LAYER_SCHE_BLERq is greater than the sum of LAYER_SCHE_BLERt and A*BLER_DELTA;
the RI_REPORT_NUMt is the sum of RI reporting times of RI parameter values corresponding to all layer numbers less than or equal to t, the CQI_THRESHOLD_NUMt is the sum of CQI falling numbers in CQI intervals corresponding to all layer numbers less than or equal to t, the LAYER_SCHE_BLERq is downlink Block Error Rate (BLER) information during a layer q scheduling, the LAYER_SCHE_BLERt is downlink BLER information during a layer t scheduling, the A is a difference between q and t, and the BLER_DELTA is a preset BLER change threshold.

In one exemplary embodiment, the first acquisition unit is configured to:
acquire, in a case where the current state is a layer m state wherein the maximum layer number is m, a reference state as a layer r state, where r is all layer numbers less than m, and a constraint condition corresponding to the layer r state is to meet one of following three branches.

An eighth branch is that: a ratio of RI_REPORT_NUMr to RI_REPORT_TOTAL_NUM is greater than a seventh threshold; a ninth branch is that: a ratio of CQI_THRESHOLD_NUMr to CQI_THRESHOLD_TOTAL_NUM is greater than an eighth threshold; and a tenth branch is that: LAYER_SCHE_BLERm being greater than the sum of LAYER_SCHE_BLERr and B*BLER_DELTA.
the RI_REPORT_NUMr is the sum of RI reporting times of RI parameter values corresponding to all layer numbers less than or equal to the r, the RI_REPORT_TOTAL_NUM is RI reporting total times, the RI data comprises RI reporting total times within the current period,and the RI parameter values and the RI reporting times with a corresponding relationship, CQI_THRESHOLD_NUMr is the sum of CQI falling numbers in CQI intervals corresponding to all layer numbers less than or equal to r, the CQI_THRESHOLD_TOTAL_NUM is CQI reporting total times, the CQI data comprises CQI reporting total times within the current period ,and the CQI intervals and the CQI falling numbers with a corresponding relationship , the LAYER_SCHE_BLERm is downlink BLER information during a layer m scheduling, the LAYER_SCHE_BLERr is downlink BLER information during a layer r scheduling, the B is a difference between m and r, and the BLER_DELTA is a preset BLER change threshold.

In one exemplary embodiment, the apparatus further includes a second determination module.

The second determination module is configured to determine, after the target layer number adjustment condition that the RI data and CQI data meet is queried from one or more layer number adjustment conditions corresponding to the current scheduling layer number, the current scheduling layer number to be the scheduling layer number used by the base station within the target period in a case where the target layer number conversion condition is not queried.

It is to be noted that, each of the above modules may be realized by software or hardware. For the latter, the each of the above modules may be realized by, but is not limited to, the following way: all of the above modules are in the same processor; or, the above modules are respectively in different processors in form of any combination.

The embodiments of the present disclosure further provide a storage medium, including a stored program. The program performs any of the above methods when running.

Optionally, in the embodiment, the storage medium may be configured to store a program code for executing the following steps.

At S1, RI data corresponding to RI information, , and Channel Quality Indicator (CQI) data corresponding to CQI information, the RI information and the CQI information being reported by the terminal within the current period.

At S2, a target layer number adjustment condition that the RI data and the CQI data meet is queried from one or more layer number adjustment conditions corresponding to a current scheduling layer number, where a base station is configured to perform downlink scheduling on control information and data information within the current period according to the current scheduling layer number, the one or more layer number conversion conditions are in one-to-one correspondence with one or more scheduling layer numbers, and the one or more scheduling layer numbers are scheduling layer numbers to which the current scheduling layer number is allowed to be converted.

At S3, a target scheduling layer number corresponding to the target layer number adjustment condition is determined to be a scheduling layer number used by the base station within a target period, where the target period is a period after the current period.

In one exemplary embodiment, the computer-readable storage medium may include, but is not limited to, a U disk, a Read Only Memory (ROM), an RAM, a mobile hard disk, a magnetic disk, a compact disc, and other media capable of storing the computer program.

The embodiments of the present disclosure further provide an electronic apparatus, which includes a memory and a processor. The memory stores a computer program. The processor is configured to run the computer program to execute the steps in any of the above method embodiments.

Optionally, the electronic apparatus may further include a transmission device and an input/output device. The transmission device is connected with the processor, and the input/output device is connected with the processor.

Optionally, in the embodiment, the processor may be configured to execute the following steps through the computer program.

At S1, RI data corresponding to RI information, , and Channel Quality Indicator (CQI) data corresponding to CQI information, the RI information and the CQI information being reported by the terminal within the current period.

At S2, a target layer number adjustment condition that the RI data and the CQI data meet is queried from one or more layer number adjustment conditions corresponding to a current scheduling layer number, where a base station is configured to perform downlink scheduling on control information and data information within the current period according to the current scheduling layer number, the one or more layer number conversion conditions are in one-to-one correspondence with one or more scheduling layer numbers, and the one or more scheduling layer numbers are scheduling layer numbers to which the current scheduling layer number is allowed to be converted.

At S3, a target scheduling layer number corresponding to the target layer number adjustment condition is determined to be a scheduling layer number used by the base station within a target period, where the target period is a period after the current period.

Optionally, the specific examples in the embodiment may refer to the above embodiments and the examples described in the optional implementations, which will not be elaborated herein.

It is apparent that those skilled in the art should appreciate that the above modules and steps of the present disclosure may be implemented by a general-purpose computing apparatus, and they may be centralized in a single computing apparatus or distributed on a network composed of multiple computing apparatuses; they may be implemented by a program code which is capable of being executed by the computing apparatus, so that they may be stored in a storage apparatus and executed by the computing apparatus; and in some situations, the presented or described steps may be executed in an order different from that described here; or they are made into integrated circuit modules, respectively; or multiple modules and steps of them are made into a single integrated circuit module to realize. Thus, the present disclosure is not limited to any particular combination of hardware and software.

The above are only the preferred embodiments of the present disclosure, and is not intended to limit the present disclosure, and for those of ordinary skill in the art, various modifications and changes can be made to the present disclosure. Any modifications, equivalent substitutions, improvements, etc. within the scope of the present disclosure shall be included in the principle of the present disclosure.

## Claims

1. A method of controlling downlink scheduling of a base station, comprising:
detecting Rank Indicator (RI) data corresponding to RI information, , and Channel Quality Indicator (CQI) data corresponding to CQI information, the RI information and the CQI information being reported by the terminal within the current period;
querying, from one or more layer number adjustment conditions corresponding to a current scheduling layer number, a target layer number adjustment condition that the RI data and the CQI data meet, wherein a base station is configured to perform downlink scheduling on control information and data information within the current period according to the current scheduling layer number, the one or more layer number conversion conditions are in one-to-one correspondence with one or more scheduling layer numbers, and the one or more scheduling layer numbers are scheduling layer numbers to which the current scheduling layer number is allowed to be converted; and
determining a target scheduling layer number corresponding to the target layer number adjustment condition to be a scheduling layer number used by the base station within a target period, wherein the target period is a period after the current period.

2. The method according to claim 1, wherein the querying, from one or more layer number adjustment conditions corresponding to a current scheduling layer number, a target layer number adjustment condition that the RI data and the CQI data meet comprises:
taking the current scheduling layer number as a current state, and acquiring, from a state conversion model, a constraint condition corresponding to each of one or more reference states corresponding to the current state to obtain one or more constraint conditions, wherein the state conversion model records state conversion relationships each being between scheduling layer numbers allowed to be used by the base station and constraint conditions that each of the state conversion relationship needs to meet, each of the one or more reference states is state having one of the state conversion relationships with the current state, each of the one or more reference state corresponding to one scheduling layer number to which the current scheduling layer number is allowed to be converted, and the one or more layer number adjustment conditions comprise the one or more constraint conditions; and
acquiring, from the one or more constraint conditions, a target constraint condition that the RI data and the CQI data meet as the target layer number adjustment condition.

3. The method according to claim 2, wherein the acquiring, from a state conversion model, a constraint condition corresponding to each of one or more reference states corresponding to the current state comprises:
in a case where the current state is a layer p state wherein the minimum layer number is p, acquiring a reference state as a layer p+1 state, wherein the constraint condition corresponding to the layer p+1 state is to meet following two branches at the same time:
a first branch: a ratio of RI_REPORT_NUMp to RI_REPORT_TOTAL_NUM being less than a first threshold; and a second branch: a ratio of CQI_THRESHOLD_NUMp to CQI_THRESHOLD_TOTAL_NUM being less than a second threshold;
wherein the RI_REPORT_NUMp is RI reporting times of a RI parameter value corresponding to the minimum layer number, the RI_REPORT_TOTAL_NUM is RI reporting total times, the RI data comprises the RI reporting total times within the current period , and the RI parameter values and the RI reporting times with a corresponding relationship, the CQI_THRESHOLD_NUMp is a CQI falling number in a CQI interval corresponding to the minimum layer number, the CQI_THRESHOLD_TOTAL_NUM is CQI reporting total times, and the CQI data comprises the CQI reporting total times within the current period ,and the CQI interval and the CQI falling number with a corresponding relationship as the CQI data.

4. The method according to claim 2, wherein the acquiring, from a state conversion model, a constraint condition corresponding to each of one or more reference states corresponding to the current state comprises:
in a case where the current state is a layer q state wherein an intermediate layer number is q except for the minimum layer number and the maximum layer number, acquiring a reference state as a layer q+1 state and a layer t state, wherein a constraint condition corresponding to the layer q+1 state is to meet following two branches at the same time:
a third branch: a ratio of RI_REPORT_NUMq to RI_REPORT_TOTAL_NUM being greater than or equal to a third threshold; and a fourth branch: a ratio of CQI_THRESHOLD_NUMq to CQI_THRESHOLD_TOTAL_NUM being greater than or equal to a fourth threshold;
wherein the RI_REPORT_NUMq is the sum of RI reporting times of RI parameter values corresponding to all layer numbers greater than q, the RI_REPORT_TOTAL_NUM is RI reporting total times, the RI data comprises RI reporting total times within the current period ,and the RI parameter values and the RI reporting times with a corresponding relationship, the CQI_THRESHOLD_NUMq is the sum of CQI falling numbers in CQI intervals corresponding to all layer numbers greater than q, the CQI_THRESHOLD_TOTAL_NUM is reporting total times, and the CQI data comprises CQI reporting total times within the current period, and the CQI intervals and the CQI falling numbers with a corresponding relationship ;
t is all layer numbers less than q, and a constraint condition corresponding to the layer t state is to meet one of following three branches:
a fifth branch: a ratio of RI_REPORT_NUMt to RI_REPORT_TOTAL_NUM being greater than a fifth threshold; a sixth branch: a ratio of CQI_THRESHOLD_NUMt to CQI_THRESHOLD_TOTAL_NUM being greater than a sixth threshold; and a seventh branch: LAYER_SCHE_BLERq being greater than the sum of LAYER_SCHE_BLERt and A*BLER_DELTA;
wherein the RI_REPORT_NUMt is the sum of RI reporting times of RI parameter values corresponding to all layer numbers less than or equal to t, the CQI_THRESHOLD_NUMt is the sum of CQI falling numbers in CQI intervals corresponding to all layer numbers less than or equal to t, the LAYER_SCHE_BLERq is downlink Block Error Rate (BLER) information during a layer q scheduling, the LAYER_SCHE_BLERt is downlink BLER information during a layer t scheduling, the A is a difference between q and t, and the BLER_DELTA is a preset BLER change threshold.

5. The method according to claim 2, wherein the acquiring, from a state conversion model, a constraint condition corresponding to each of one or more reference states corresponding to the current state comprises:
in a case where the current state is a layer m state wherein the maximum layer number is m, acquiring a reference state as a layer r state, wherein r is all layer numbers less than m, and a constraint condition corresponding to the layer r state is to meet one of following three branches:
an eighth branch: a ratio of RI_REPORT_NUMr to RI_REPORT_TOTAL_NUM being greater than a seventh threshold; a ninth branch: a ratio of CQI_THRESHOLD_NUMr to CQI_THRESHOLD_TOTAL_NUM being greater than an eighth threshold; and a tenth branch: LAYER_SCHE_BLERm being greater than the sum of LAYER_SCHE_BLERr and B*BLER_DELTA;
wherein the RI_REPORT_NUMr is the sum of RI reporting times of RI parameter values corresponding to all layer numbers less than or equal to the r, the RI_REPORT_TOTAL_NUM is RI reporting total times, the RI data comprises RI reporting total times within the current period, and the RI parameter values and the RI reporting times with a corresponding relationship, CQI_THRESHOLD_NUMr is the sum of CQI falling numbers in CQI intervals corresponding to all layer numbers less than or equal to r, the CQI_THRESHOLD_TOTAL_NUM is CQI reporting total times, the CQI data comprises CQI reporting total times within the current period ,and the CQI intervals and the CQI falling numbers with a corresponding relationship , the LAYER_SCHE_BLERm is downlink BLER information during a layer m scheduling, the LAYER_SCHE_BLERr is downlink BLER information during a layer r scheduling, the B is a difference between m and r, and the BLER_DELTA is a preset BLER change threshold.

6. The method according to claim 1, wherein the detecting RI data corresponding to RI information, which is reported by a terminal within a current period, and detecting CQI data corresponding to CQI information, comprises:
receiving the RI information reported by the terminal within the current period; recording times of occurrences of each RI parameter value in the RI information and RI reporting total times to obtain RI reporting total times, and each RI parameter value and reporting times with a corresponding relationship as the RI data;
receiving the CQI information reported by the terminal within the current period; and recording the number of CQI parameters in the CQI information falling into each of a plurality of CQI intervals and CQI reporting total times to obtain CQI reporting total times , and the CQI intervals and the number of CQI parameters in the CQI information falling into each of a plurality of CQI intervals with a corresponding relationship as the CQI data.

7. The method according to claim 6, wherein the recording times of occurrences of each RI parameter value in the RI information and RI reporting total times to obtain RI reporting total times, and each RI parameter value and reporting times with a corresponding relationship as the RI data comprises:
calculating times of occurrences of each integer from 1 to N in the RI information reported by the terminal within the current period and the RI reporting total times to obtain the RI reporting total times, and the each RI parameter value and RI reporting times with a corresponding relationship as the RI data, wherein the N is the number of downlink radio frequency (RF) antennas of the base station.

8. The method according to claim 6, wherein the recording the number of CQI parameters in the CQI information falling into each of a plurality of CQI intervals and CQI reporting total times to obtain the CQI reporting total times, and the CQI intervals and the number of CQI parameters in the CQI information falling into each of a plurality of CQI intervals with a corresponding relationship as the CQI data comprises:
recording the number of CQI parameters in the CQI information falling into each of the plurality of CQI intervals and the CQI reporting total times to obtain the CQI reporting total times ,and the CQI intervals and the number of CQI parameters in the CQI information falling into each of a plurality of CQI intervals as the CQI data.

9. The method according to claim 1, wherein after the querying, from one or more layer number adjustment conditions corresponding to a current scheduling layer number, a target layer number adjustment condition that the RI data and the CQI data meet, the method further comprises:
in a case where the target layer number conversion condition is not queried, determining the current scheduling layer number to be the scheduling layer number used by the base station within the target period.

10. An apparatus of controlling downlink scheduling of a base station, comprising:
a detection module, configured to detect Rank Information (RI) data corresponding to RI information, and Channel Quality Indicator (CQI) data corresponding to CQI information, the RI information and the CQI information being reported by a terminal within a current period;
a query module, configured to query, from one or more layer number adjustment conditions corresponding to a current scheduling layer number, a target layer number adjustment condition that the RI data and the CQI data meet, wherein a base station is configured to perform downlink scheduling on control information and data information within the current period according to the current scheduling layer number, the one or more layer number conversion conditions are in one-to-one correspondence with one or more scheduling layer numbers, and the one or more scheduling layer numbers are scheduling layer numbers to which the current scheduling layer number is allowed to be converted; and
a first determination module, configured to determine a target scheduling layer number corresponding to the target layer number adjustment condition to be a scheduling layer number used by the base station within a target period, wherein the target period is a period after the current period.

11. A computer-readable storage medium, comprising a stored program, wherein the program performs the method according to any one of claims 1 to 9.

12. An electronic apparatus, comprising a memory and a processor, wherein the memory stores a computer program, and the processor is configured to perform the method according to any one of claims 1 to 9 through the computer program.
